# EUROPEAN PATENT SPECIFICATION

(11) **EP 2 195 137 B1**
(45) Date of publication and mention of the grant of the patent: **12.10.2011**
(21) Application number: 08776110.2
(22) Date of filing: 01.08.2008
(51) Int. Cl.: B23Q 7/06, B60P 1/00

(54) **LOADING APPARATUS**
LADEVORRICHTUNG
APPAREIL DE CHARGEMENT

(30) Priority: 04.08.2007 GB 0715222
(43) Date of publication of application: 16.06.2010
(73) Proprietor: Dunn Bros. (1995) Limited, West Midlands DY1 4RH (GB)
(72) Inventor: DUNN, David, Richard, Dudley, West Midlands DY1 4RH (GB); DUNN, Karl, Stephen, Andrew, Dudley, West Midlands DY1 4RH (GB); DUNN, Alan, Dudley, West Midlands DY1 4RH (GB)
(74) Representative: Holloway, Lucinda
(86) International application number: PCT/GB2008/002626
(87) International publication number: WO 2009/019449

(56) References cited:
- DE-U1- 20 117 346
- US-A- 4 260 317
- US-A1- 2006 078 410

## Description

The present invention relates to loading apparatus for loading material into a container, according to the preamble of claim 1. It relates further to a method of loading material into a container using such an apparatus. An appparatus of that kind is known from US 2006/0078410.

Increasingly, even relatively low value bulk materials such as scrap metal are transported by shipping containers. However materials such as scrap metal are non homogeneous, which can cause problems in loading, making loading relatively time-consuming. In one conventional arrangement, the shipping container is up-ended, and scrap material is loaded in to the container vertically from above. However, such arrangements often lead to damage of the container.

According to a first aspect of the present invention, there is provided loading apparatus for loading material into a container, the apparatus including a charging receptacle defining a material receiving space in which material is receivable in use, wherein the apparatus further includes material moving means comprising a pusher actuator and a pusher member operable in use to move the material out of the material receiving space and wherein the charging receptacle in moveable in use into the container.

The apparatus may include pusher guide means for guiding the movement of the pusher. The guide means may be arranged to substantially permit movement of the pusher only along one direction.

The pusher guide means may include one or more guide surfaces. The pusher guide means may include friction reducing means, which may include one or more rollers, which may run along the one or more guide surfaces.

The actuator for moving the pusher may be an hydraulic ram. The hydraulic ram may be double ended. The material moving means may include an actuator support, which may be movable, and which may be movable along the one direction.

Possibly, the apparatus includes receptacle moving means, for moving the receptacle into and out of the container.

Possibly, the apparatus includes receptacle guide means, which may be arranged to substantially permit movement of the receptacle only along one direction. Possible the direction of movement of the receptacle is substantially the same as the movement of the pusher. Possibly the receptacle guide means include channels, which may be defined by a support to which the receptacle is mounted.

Possibly the receptacle moving means include friction reducing means, which may include rollers or wheels, which may run along the channels.

Possibly the receptacle moving means include an actuator, which may be in the form of an hydraulic ram.

According to a second aspect of the present invention, there is provided a method of loading material into a container, the method including the steps of loading material into a material receiving space of a charging receptacle, moving the receptacle into the container, and then actuating material moving means to move the material out of the material receiving space.

Possibly, the method includes the step of moving the receptacle out of the container, as the material moving means moves the material out of the material receiving space.

Possibly, the loading apparatus is as described in any of the preceding statements.

Embodiments of the present invention will now be described, by way of example only, and with reference to the accompanying drawings, in which:-
Figures 1A, 1B and 1C of Figure 1 are schematic side views of a loading apparatus at different stages of loading material into a container;
Figure 2 is a side view of another loading apparatus;
Figure 3 is a cross sectional view of part of the loading apparatus of Figure 2;
Figure 4 is a side view of part of the loading apparatus of Figure 2;
Figure 5 is a cross sectional view of part of the loading apparatus of Figure 2; and
Figure 6 is a cross sectional view of part of the loading apparatus of Figure 2.

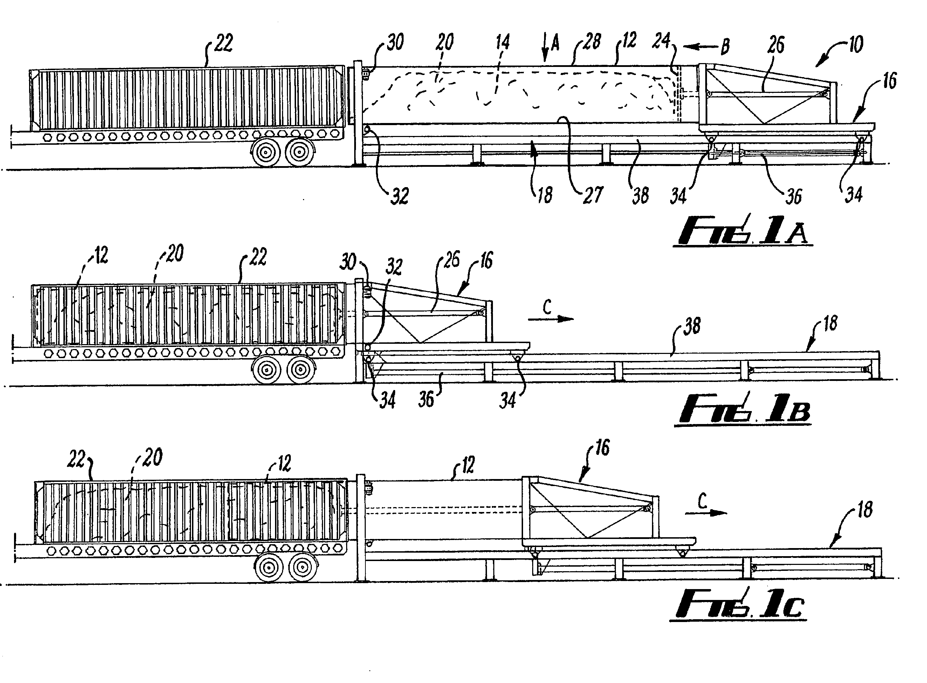

Figures 1A, 1B and 1C of Figure 1 show a loading apparatus 10 at different stages of loading material 20 into a container 22. The container 22 is a standardised shipping container commonly used for international freight transport. Such containers are of standardised dimensions, and could be approximately 6, 9 or 12 metres in length.

Referring to Figure 1A, the loading apparatus 10 includes a charging receptacle 12, which includes a floor 27, a pair of side walls 28 upstanding from the floor 27 and an end wall formed by a pusher member 24 at one end. The other end of the charging receptacle 12 is open. The charging receptacle 12 defines a material receiving space 14. In the example shown in Figure 1, the pusher member 24 is in the form of a planar plate.

The loading apparatus 10 includes receptacle moving means including a carriage 16 to which the receptacle 12 is mounted at one end. The carriage 16 is mounted to a support in the form of a support structure 18.

The loading apparatus 10 includes receptacle guide means in the form of channels 38. The receptacle moving means includes friction reducing means in the form of wheels 34 which run within the channels 38 to guide the movement of the receptacle 12. The receptacle guide means also include vertical rollers 30 and horizontal rollers 32 to guide and support the end of the receptacle 12 away from the carriage 16.

The material moving means includes an actuator in the form of an hydraulic ram 26 for moving the pusher member 24, the pusher ram 26 extending between the carriage 16 and the pusher member 24.

The receptacle moving means includes an actuator in the form of an hydraulic ram 36, which extends between the support structure 18 and the carriage 16.

In use, a shipping container 22 to be loaded is positioned so that the interior of the container 22 is aligned with the material receiving space 14 of the charging receptacle 12. In an initial condition, the pusher ram 26 and receptacle ram 36 are fully retracted, and the pusher member 24 is positioned at the end of the charging receptacle 12 away from the container 22. Material 20 is loaded into the material receiving space 14 as shown by arrow A. The material 20 could be in the form of scrap metal. When the material receiving space 14 is substantially filled, the material 20 is levelled. The charging and levelling of material 20 into the material receiving space 14 can take place before the container 22 is positioned in alignment with the material receiving space 14.

The receptacle ram 36 then extends, moving the carriage 16 and receptacle 12 along the support structure 18, so that the receptacle 12 moves into the interior of the container 22 as indicated by arrow B in Figure 1A, until the condition shown in Figure 1B is reached, in which the receptacle 12 is substantially fully within the container 22. In this condition, the receptacle ram 36 is fully extended and the pusher ram 26 is still fully retracted. The movement of the receptacle 12 and carriage 16 is guided by the vertical rollers 30, the horizontal rollers 32 and the carriage wheels 34 running in the channels 38. In this embodiment, the receptacle 12 is cantilevered, so that the weight of the receptacle 12 and the material 20 within the receptacle 12 is at least partially, and optimally wholly, supported by the carriage 16 and in particular the carriage wheels 34 running within the channels 38, so that the possibility of damage to the container 22 is minimised.

The pusher ram 26 is then actuated to move the pusher member 24 further into the interior of the container 22, compressing the material 20 and moving the material 20 along the material receiving space 14 further into the container 22. While the pusher ram 26 is operating, the hydraulic pressure actuating the receptacle ram 36 is released, so that the carriage 16 is free to move along the support structure 18 as shown by arrows C in Figs 1B and 1C. As the pusher ram 26 continues to compress the material 20, there comes a point at which the inertia of the carriage 16 is overcome, and rather than further compressing the material 20, the pusher ram 26 begins to extend, moving the carriage 16 away from the container 22 along the support structure 18 as shown by arrow C in Fig 1C. This movement, which is automatic in the sense it does not occur in response to a specific user action, continues until the pusher ram 26 is fully extended, at which point the open end of the charging receptacle 12 is still within the interior of the container 22, and the pusher member 24 is positioned at the open end of the charging receptacle 12. The receptacle ram 36 then operates to move the carriage 16 and receptacle 12 back along the support structure 18, fully withdrawing the receptacle 12 from the container 22, leaving the container 22 loaded with the material 20.

The container 22 can then be moved away from the loading apparatus for onward transport. The pusher ram 26 then retracts, moving the pusher member 24 back to the initial condition, in which the pusher ram 26 is fully retracted as shown in Fig 1A.

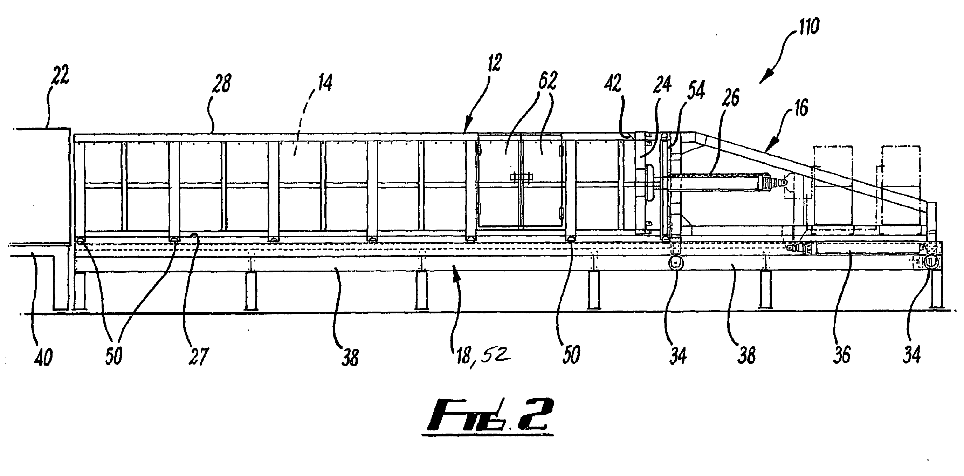

Figs 2 to 6 show another embodiment of the invention, many features of which are the same or similar to those described in relation to the embodiment shown in Figure 1. Where features are the same or similar, the same reference numerals have been used, and these features will not be described again for the sake of brevity.

Referring to Figure 2, the main difference between the loading apparatus 110 shown in Figure 2 and the apparatus 10 described in Figure 1 is that the receptacle guide means, rather than including vertical and horizontal rollers 30, 32, includes a pair of spaced parallel receptacle roller channels 52 defined by the support structure 18 in which run friction reducing means in the form of receptacle rollers 50, which are mounted to the underside of the receptacle 12. As the receptacle 12 moves into the container 22, the receptacle rollers 50 run on the floor of the container 22, so that the carriage 16 does not have to support the weight of the charging receptacle 12 and material 20 when the charging receptacle 12 is within the container 22.

As shown in Figure 2, in one example the container 22 could be positioned on a container support 40 for alignment with the material receiving space 14.

The pusher member 24 could include formations for engaging/guiding the material 20. For example, as shown in Figure 2, the pusher member 24 includes a formation in the form of a projecting fillet 42, projecting from an upper part of the pusher member 24. The charging receptacle side walls 28 could include doors 62 to permit side loading.

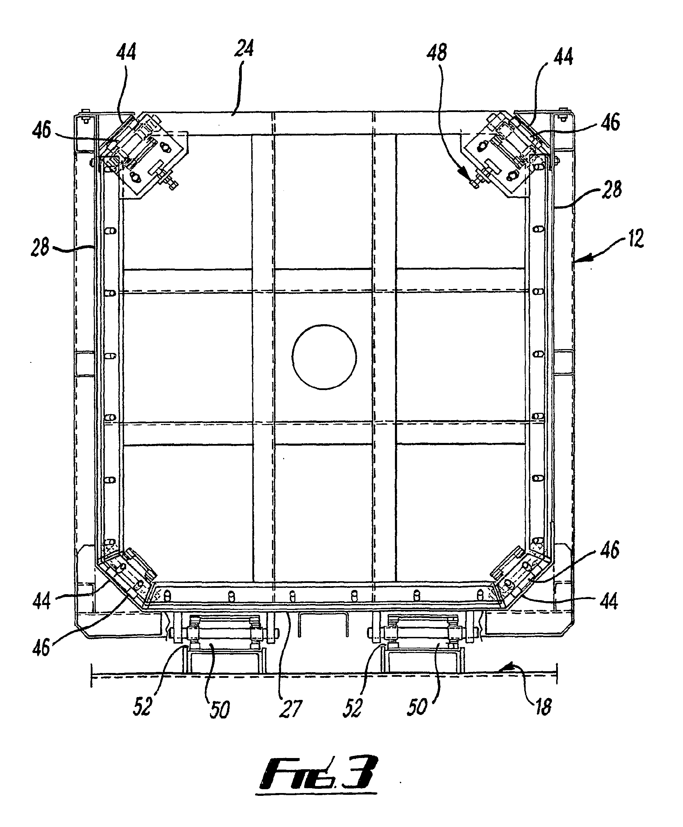

Figure 3 shows a cross section through part of the loading apparatus 110 of Figure 2, showing the pusher member 24. In this example, the apparatus 110 includes pusher guide means which include a plurality of inwardly facing guide surfaces 44, one guide surface 44 being provided at each of the junctions between the side walls 28 and floor 27 and along the upper most edge of the side walls 28. Each of the guide surfaces 44 run longitudinally along the length of the receptacle 12, and are substantially planar, and are substantially at an angle of 45° to the vertical.

The pusher guide means includes friction reducing means which include a plurality of rollers 46 which are mounted to the pusher member 24 and are arranged to run along the guide surfaces 44. The pusher member 24 includes an adjustable mounting for mounting each roller 44 to the pusher member 24, the adjustable mounting including an adjusting bolt 48 permitting adjustment of the respective roller 46 relative to the respective guide surface 44. In use, the guide surfaces 44 and rollers 46 are arranged to only permit movement of the pusher member 24 substantially longitudinally.

Figure 3 also shows more clearly the arrangement of the receptacle rollers 50 running along the receptacle roller channels 52 defined by the support structure 18. Each of the receptacle roller channels 52 is in the form of a relatively shallow "U".

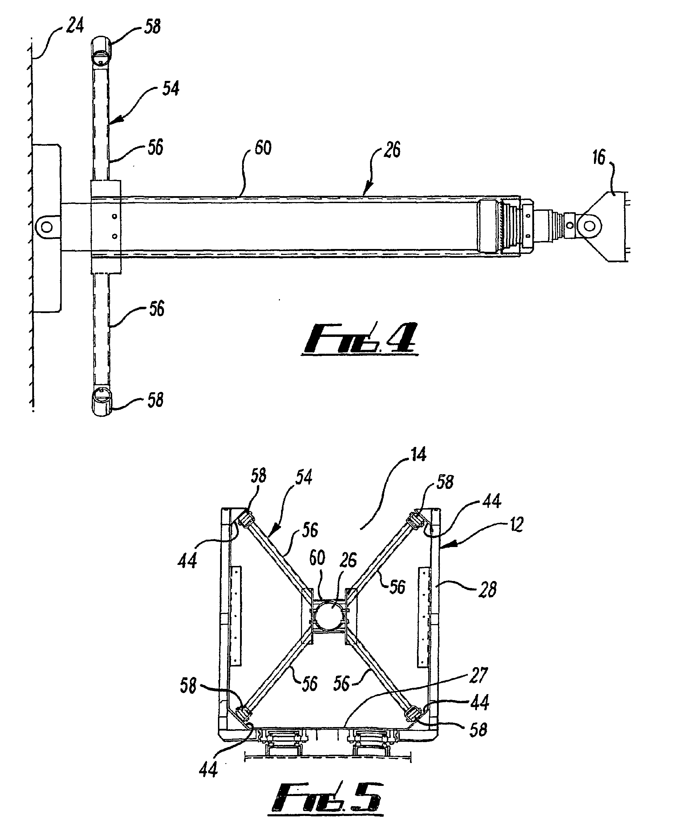

Figs 4 and 5 show a side view of the pusher actuator 26 and a cross sectional view along the longitudinal axis of the pusher actuator 26 respectively. The apparatus 110 includes a pusher actuator support, the support including a support sleeve 60 and a plurality of support arms 54, which extend from the support sleeve 60 towards each of the guide surfaces 44. The support includes friction reducing means including rollers 58 at the end of each arm 56, each roller 58 running against the respective guide surface 44.

In one example, the pusher actuator 26 is a double ended telescopic hydraulic ram, which extends from each end to move the pusher member 24 along the charging receptacle 12. As the actuator 26 extends and retracts, the support in the form of the sleeve 60 and arms 56 supports the actuator 26, preventing damage to the actuator 26 which could occur because of the relatively large distance between the carriage 16 and the pusher member 24 when the pusher actuator 26 is fully extended.

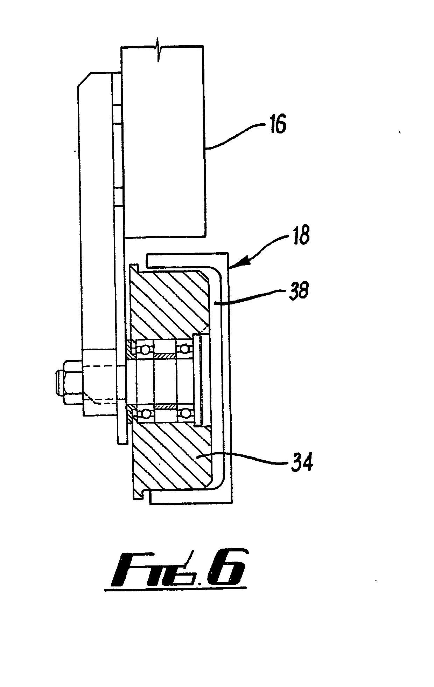

Figure 6 shows a cross section looking along the longitudinal direction of one of the carriage wheels 34, which is in the form of flanged wheel and runs along the channel 38 defined by the support structure 18. The channel 38 is a relatively close fit to the wheel 34, permitting rotation of the wheel 34, but permitting only a relatively small amount of vertical movement of the wheel 34. Thus the channel 38 substantially permits only longitudinal movement of the carriage 16 relative to the support structure 18.

A particular advantage of the loading apparatus of the invention is that the charging receptacle 12 can be filled with material while the container 22 is being replaced or repositioned to receive the material. Thus the apparatus results in faster filling and turnaround of containers. The charging receptacle 12 can be made as robust as necessary to receive the scrap material falling from height under normal loading conditions without the risk of any damage to the shipping containers which may result in adverse claims for damage. It has been found that scrap material does not need to be processed to the same degree (ie cut up as small). The charging receptacle ensures that the container 22 is loaded with the material 20 in a safe manner without damage to the container 22, but enables the container 22 to be fully and efficiently loaded.

The amount of material 20 loaded into the container 22 is determined by the amount of material 20 loaded into the charging receptacle 12 which is dependent upon the size of the charging receptacle 12, the density of the material and also the degree to which the material 20 is compacted by the loading apparatus. The size of the material receiving space 14 could be varied by the operator, depending on the type of material 20 to be loaded, by adjusting the position of the pusher actuator 26 before loading of the material receiving space 14.

Various modifications could be made without departing from the scope of the invention. The charging receptacle could be of any suitable size and shape. The pusher member could be of any suitable size and shape. For example, the pusher member could be provided with formations for engaging, guiding or compacting the material, such as inclined surfaces in the form of skirts, "cow catchers" or fillets. The pusher moving means and the receptacle moving means could be of any suitable form. For example, the moving means in each case could comprise an electrically or a mechanically powered drive means. The pusher guide means and the receptacle guide means could be of any suitable form. The friction reducing means could be of any suitable form. The charging receptacle could be loaded in any suitable manner, and could include any suitable number of doors, which could be arranged in any suitable way.

There is thus provided loading apparatus for loading material into a shipping container which enables materials such as scrap material to be loaded into shipping containers more efficiently, safely and with less risk of damage to the container than conventional arrangements permit.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon, as far as they are covered by the scope of the appended claims.

## Claims

1. Loading apparatus (10, 110) for loading material into a container (22), the apparatus including a charging receptacle (12) defining a material receiving space (14) in which material is receivable in use, wherein the charging receptacle is moveable in use into the container, the apparatus being **characterised in that** it further includes material moving means comprising a pusher actuator (26) and a pusher member (24) operable in use to move the material out of the material receiving space.

2. Loading apparatus according to claim 1, in which the apparatus includes pusher guide means for guiding the movement of the pusher member (24) the guide means being arranged to substantially permit movement of the pusher member only along one direction.

3. Loading apparatus according to claim 2, in which the pusher guide means includes at least one of one or more guide surfaces (44) and friction reducing means.

4. Loading apparatus according to claim 3 in which the pusher guide means includes both of one or more guide surfaces (44) and friction reducing means, and wherein the friction reducing means includes one or more rollers (46), arranged to run along the one or more guide surfaces (44).

5. Loading apparatus according any preceding claim, in which the pusher actuator is an hydraulic ram.

6. Loading apparatus according to claim 2, in which the material moving means includes an actuator support (16), which optionally, is moveable along the one direction.

7. Loading apparatus according to any of the preceding claims, in which the apparatus includes receptacle moving means (16,36), for moving the receptacle into and out of the container.

8. Loading apparatus according to claim 2, in which the apparatus includes receptacle guide means, and wherein, optionally, the receptacle guide means are arranged to substantially permit movement of the receptacle only along one direction, which is substantially the same as the direction of movement of the pusher.

9. Loading apparatus according to claim 7 or claim 8 as dependent on claim 7, in which the receptacle moving means include friction reducing means.

10. Loading apparatus according to claim 9 as dependent on claim 8, in which the receptacle guide means includes channels (38), which are defined by a support to which the receptacle is mounted, and wherein the friction reducing means comprises rollers or wheels (32,34) arranged to run along the channels.

11. Loading apparatus according to claim 7 or any of claims 8 to 10 as dependent thereon, in which the receptacle moving means include an actuator (36).

12. An apparatus according to claim 11, in which the actuator is in the form of an hydraulic ram.

13. A method of loading material into a container, the method including of the steps of: loading material into a material receiving space (14) of a charging receptacle (12), moving the charging receptacle into the container (22), and actuating material moving means (24,26) to move the material out of the material receiving space.

14. A method of loading material into a container according to claim 13, in which the method further includes the step of moving the receptacle out of the container, as the material moving means moves the material out of the material receiving space.

15. A method according to claim 13 or claim 14 comprising loading the container using the loading apparatus as defined in any of claims 1 to 12.

## Patentansprüche

1. Lade-Vorrichtung (10, 110) zum Laden von Material in einen Container (22), wobei die Vorrichtung einen Ladebehälter (12) enthält, der einen Material-Aufnahmeraum (14) bestimmt, in welchem während des Betriebs Material aufgenommen werden kann, wobei der Ladebehälter während des Betriebs in den Container hinein bewegt werden kann, wobei die Vorrichtung **dadurch gekennzeichnet ist, dass** sie ausserdem ein Material-Bewegungsmittel mit einem Schieber-Aktuator (26) und einem Schieberglied (24) enthält, das während des Betriebs betätigbar ist, um das Material aus dem Material-Aufnahmeraum (14) heraus zu bewegen.

2. Lade-Vorrichtung nach Anspruch 1, **dadurch gekennzeichnet, dass** die Vorrichtung ein Schieber-Führungsmittel zum Führen der Bewegung des Schieberglieds (24) enthält, wobei das Führungsmittel ausgestaltet ist, um im Wesentlichen eine Bewegung des Schieberglieds nur entlang einer Richtung zu gestatten.

3. Lade-Vorrichtung nach Anspruch 2, **dadurch gekennzeichnet, dass** das Schieber-Führungsmittel mindestens eine oder mehrere Führungsflächen (44) und/oder ein Reibung-Verringerungsmittel enthält.

4. Lade-Vorrichtung nach Anspruch 3, **dadurch gekennzeichnet, dass** das Schieber-Führungsmittel sowohl eine oder mehrere Führungsflächen (44) als auch ein Reibung-verringerungsmittel enthält, und wobei das Reibung-Verringerungsmittel eine oder mehrere Rollen (46) enthält, die derart ausgestaltet sind, dass sie entlang der einen oder mehreren Führungsflächen (44) verlaufen.

5. Lade-Vorrichtung nach einem der vorhergehenden Ansprüche, **dadurch gekennzeichnet, dass** der Schieber-Aktuator eine hydraulische Ramme ist.

6. Lade-Vorrichtung nach Anspruch 2, **dadurch gekennzeichnet, dass** das Material-Bewegungsmittel eine Aktuator-Abstützung (16) enthält, die optional entlang der einen Richtung bewegbar ist.

7. Lade-Vorrichtung nach einem der vorhergehenden Ansprüche, **dadurch gekennzeichnet, dass** die vorrichtung ein Behälter-Bewegungsmittel (16, 36) enthält, um den Behälter in den Container hinein und aus diesem heraus zu bewegen.

8. Lade-Vorrichtung nach Anspruch 2, **dadurch gekennzeichnet, dass** die Vorrichtung Behälter-Führungsmittel enthält, und wobei optional die Behälter-Führungsmittel ausgestaltet sind, um im wesentlichen eine Bewegung des Behälters nur entlang einer Richtung zu gestatten, welche im wesentlichen dieselbe wie die Bewegungsrichtung des Schiebers ist.

9. Lade-Vorrichtung nach Anspruch 7 oder nach Anspruch 8 bei Abhängigkeit von Anspruch 7, **dadurch gekennzeichnet, dass** die Behälter-Bewegungsmittel ein Reibung-Verringerungsmittel enthalten.

10. Lade-Vorrichtung nach Anspruch 9 bei Abhängigkeit von Anspruch 8, **dadurch gekennzeichnet, dass** das Behälter-Führungsmittel Kanäle (38) enthält, die durch eine Abstützung bestimmt sind, an welcher der Behälter montiert ist, und wobei das Reibung-Verringerungsmittel Rollen oder Räder (32, 34) aufweist, die derart angeordnet sind, dass sie entlang der Kanäle verlaufen.

11. Lade-Vorrichtung nach Anspruch 7 oder einem der davon abhängigen Ansprüche 8 bis 10, **dadurch gekennzeichnet, dass** die Behälter-Bewegungsmittel einen Aktuator (36) enthalten.

12. Lade-Vorrichtung nach Anspruch 11, **dadurch gekennzeichnet, dass** der Aktuator in Form einer hydraulischen Ramme vorliegt.

13. Verfahren zum Laden von Material in einen Container, wobei das Verfahren die folgenden Schritte aufweist:
Laden von Material in einen Material-Aufnahmeraum (14) eines Ladebehälters (12);
Bewegen des Ladebehälters in den Container (22); und Betätigen des Material-Bewegungsmittels (24, 26), um das Material aus dem Material-Aufnahmeraum heraus zu bewegen.

14. Verfahren zum Laden von Material in einen Container nach Anspruch 13, **dadurch gekennzeichnet, dass** das Verfahren ausserdem einen Schritt aufweist, um den Behälter aus dem Container heraus zu bewegen, wenn das Material-Bewegungsmittel das Material aus dem Material-Aufnahmeraum heraus bewegt

15. Verfahren nach Anspruch 13 oder 14, **dadurch gekennzeichnet, dass** es ein Beladen des Containers unter Verwendung der Lade-Vorrichtung gemäss einem der Ansprüche 1 bis 12 aufweist.

## Revendications

1. Appareil de chargement (10, 110) pour charger un matériau dans un conteneur (22), l'appareil comprenant un réceptacle de charge (12) définissant un espace de réception de matériau (14) dans lequel le matériau peut être reçu, à l'usage, dans lequel le réceptacle de charge est mobile à l'usage, dans le conteneur, l'appareil étant **caractérisé en ce qu'**il comprend en outre des moyens de déplacement de matériau comprenant un actionneur de poussoir (26) et un élément de poussoir (24) pouvant fonctionner, à l'usage, pour faire sortir le matériau de l'espace de réception de matériau.

2. Appareil de chargement selon la revendication 1, dans lequel l'appareil comprend des moyens de guidage de poussoir pour guider le mouvement de l'élément de poussoir (24), les moyens de guidage étant agencés pour permettre sensiblement le mouvement de l'élément de poussoir uniquement le long d'une direction.

3. Appareil de chargement selon la revendication 2, dans lequel les moyens de guidage de poussoir comprennent au moins une ou plusieurs surfaces de guidage (44) et des moyens de réduction de friction.

4. Appareil de chargement selon la revendication 3, dans lequel les moyens de guidage de poussoir comprennent à la fois une ou plusieurs surfaces de guidage (44) et des moyens de réduction de friction, et dans lequel les moyens de réduction de friction comprennent un ou plusieurs rouleaux (46) agencés pour s'étendre le long des une ou plusieurs surfaces de guidage (44).

5. Appareil de chargement selon l'une quelconque des revendications précédentes, dans lequel l'actionneur de poussoir est un vérin hydraulique.

6. Appareil de chargement selon la revendication 2, dans lequel les moyens de déplacement de matériau comprennent un support d'actionneur (16) qui est facultativement mobile le long de la direction.

7. Appareil de chargement selon l'une quelconque des revendications précédentes, dans lequel l'appareil comprend des moyens de déplacement de réceptacle (16, 36) pour faire entrer et sortir le réceptacle du conteneur.

8. Appareil de chargement selon la revendication 2, dans lequel l'appareil comprend des moyens de guidage de réceptacle et dans lequel, facultativement, les moyens de guidage de réceptacle sont agencés pour permettre sensiblement, le mouvement du réceptacle uniquement le long d'une direction, qui est sensiblement la même que la direction de mouvement du poussoir.

9. Appareil de chargement selon la revendication 7 ou la revendication 8 lorsqu'elle dépend de la revendication 7, dans lequel les moyens de déplacement de réceptacle comprennent des moyens de réduction de friction.

10. Appareil de chargement selon la revendication 9 lorsqu'elle dépend de la revendication 8, dans lequel les moyens de guidage de réceptacle comprennent des canaux (38) qui sont définis par un support sur lequel le réceptacle est monté, et dans lequel les moyens de réduction de friction comprennent des rouleaux ou des roues (32, 34) agencés pour circuler le long des canaux.

11. Appareil de chargement selon la revendication 7 ou l'une quelconque des revendications 8 à 10 lorsqu'elles dépendent de cette dernière, dans lequel les moyens de déplacement de réceptacle comprennent un actionneur (36).

12. Appareil selon la revendication 11, dans lequel l'actionneur se présente sous la forme d'un vérin hydraulique.

13. Procédé pour charger un matériau dans un conteneur, le procédé comprenant les étapes consistant à: charger le matériau dans un espace de réception de matériau (14) d'un réceptacle de charge (12), déplacer le réceptacle de charge dans le conteneur (22) et actionner les moyens de déplacement de matériau (24, 26) pour faire sortir le matériau de l'espace de réception de matériau.

14. Procédé pour charger un matériau dans un conteneur selon la revendication 13, dans lequel le procédé comprend en outre l'étape consistant à faire sortir le réceptacle du conteneur, au fur et à mesure que les moyens de déplacement de matériau font sortir le matériau de l'espace de réception de matériau.

15. Procédé selon la revendication 13 ou la revendication 14, comprenant l'étape consistant à charger le conteneur en utilisant l'appareil de chargement selon l'une quelconque des revendications 1 à 12.
